# EUROPÄISCHE PATENTSCHRIFT

(11) **EP 0 819 147 B1**
(45) Veröffentlichungstag und Bekanntmachung des Hinweises auf die Patenterteilung: **04.06.2003**
(21) Anmeldenummer: 96905977.3
(22) Anmeldetag: 02.04.1996
(51) Int. Cl.: C08L 3/02

(54) **BIOLOGISCH ABBAUBARE POLYMERMISCHUNG**
BIOLOGICALLY DEGRADABLE POLYMER MIXTURE
MELANGE POLYMERE BIODEGRADABLE

(30) Priorität: 07.04.1995 DE 19513237; 24.04.1995 DE 19515013
(43) Veröffentlichungstag der Anmeldung: 21.01.1998
(73) Patentinhaber: bio-tec Biologische Naturverpackungen GmbH & Co. KG, 46446 Emmerich (DE)
(72) Erfinder: LÖRCKS, Jürgen, D-46459 Rees (DE); POMMERANZ, Winfried, D-32130 Enger (DE); SCHMIDT, Harald, D-46446 Emmerich (DE)
(74) Vertreter: Troesch Scheidegger Werner AG
(86) Internationale Anmeldenummer: IB9600275
(87) Internationale Veröffentlichungsnummer: WO96031561

(56) Entgegenhaltungen:
- EP-A- 0 596 437
- WO-A-92/09654
- WO-A-93/07213
- WO-A-96/21692
- DE-A- 4 327 024
- DE-A- 4 335 983
- STARKE, Bd. 45, Nr. 9, 1.September 1993, WEINHEIM DE, Seiten 314-322, XP000394393 H.-G- FRITZ ET AL.: "Der Einsatz von Stärke bei der Modifizierung synthetischer Kunststoffe."

## Beschreibung

Die vorliegende Erfindung betrifft eine biologisch abbaubare Polymermischung, ein Verfahren zu deren Herstellung sowie ein Verfahren zur Verarbeitung der erfindungsgemässen Polymermischung.

Aus einer Vielzahl von Patentschriften und Artikeln sind Vorschläge für das Herstellen von biologisch abbaubaren Polymermischungen bekannt. Das grosse Problem bei Polymermischungen liegt in der Regel darin, dass diejenigen Mischungen, welche eine ausgezeichnete, biologische Abbaubarkeit aufweisen nur begrenzte Einsatzmöglichkeiten im Bereich der technischen Kunststoffe aufweisen, womit sich der relativ bescheidene Erfolg bis heute erklärt. Polymermischungen mit verbesserten Eigenschaften sind entweder biologisch ungenügend oder mit erhöhtem Aufwand abbaubar, oder aber sind zu teuer.

Aus der EP-535 994 ist eine Polymermischung bekannt, im wesentlichen bestehend aus Stärke und einem aliphatischen Polyester, wie beispielsweise Polycaprolacton, wobei die Stärke vorzugsweise mit Wasser destrukturiert ist.

Auch in einem Artikel der Zeitschrift "Stärke", Band 45, Nr. 9, 1. September 1993, Weinheim, Seiten 314 bis 322, wird der Einsatz von Stärke bei der Modifizierung synthetischer Kunststoffe beschrieben. Dabei wird vorgeschlagen, zunächst die Stärke mittels Wasser zu verkleistern, wobei erwähnt wird, dass diese Verkleisterung mittels eines endothermen Prozesses erfolgt. Dadurch wird offenkundig, dass es sich bei der erwähnten verkleisterten Stärke um destrukturierte Stärke handeln muss, welche mit einer Reihe von synthetischen Kunststoffen gemischt wird, um neue Verbundwerkstoffe zu entwickeln.

Demgegenüber und in Kenntnis der Unzulänglichkeiten von mit Wasser destrukturierter Stärke wird in der DE-42 37 535 vorgeschlagen, für eine biologisch abbaubare Polymermischung thermoplastische Stärke zu verwenden, welche unter Ausschluss von Wasser und unter Verwendung eines geeigneten Plastifiziermittels hergestellt wird. Die vorgeschlagenen Polymermischungen enthalten thermoplastische Stärke, ein hydrophobes Polymer sowie ein Phasenvermittler, wobei als bevorzugte Mischung thermoplastische Stärke mit Polycaprolacton vorgeschlagen wird.

An sich sind aliphatische Polyester geeignete Mischkomponenten für die Herstellung von biologisch abbaubaren Polymermischungen, weisen sie doch eine gute biologische Abbaubarkeit auf. Allerdings weisen aliphatische Polyester nur mässige Materialeigenschaften auf, wie z.B. in bezug auf Schmelzpunkt, Zugfestigkeit, etc., weshalb auch entsprechende Mischungen unter Verwendung eines auf Basis von nachwachsenden Rohstoffen hergestellten Polymers, wie beispielsweise thermoplastische Stärke nur mässige Eigenschaften aufweisen, womit erneut die Einsatzfähigkeit im Bereich der technischen Kunststoffe in Frage gestellt ist.

Die WO96/21692 schlussendlich, welche am Prioritätstag der vorliegenden Anmeldung noch nicht veröffentlicht war, beschreibt biologisch abbaubare Polymere, basierend auf Polyesteramiden, u.a. in Blends mit Stärkemischungen, vorzugsweise mit thermoplastischer Stärke. Ein Problem beim Mischen von hydrophoben Polymeren wie die erwähnten Polyesteramide mit hydrophilen Biopolymeren wie Stärke oder thermoplastische Stärke besteht in der relativ schlechten Mischbarkeit bzw. Verträglichkeit der Blendkomponenten, was sich in der Regel in nicht ausreichenden mechanischen oder thermischen Eigenschaften von Formkörpern niederschlägt, welche aus derartigen Blends hergestellt werden.

Es ist daher eine Aufgabe der vorliegenden Erfindung eine biologisch abbaubare Polymermischung vorzuschlagen, die sowohl biologisch einwandfrei abbaubar ist, und zusätzlich gute mechanische und thermische Eigenschaften aufweist, damit ein Einsatz als technischer Kunststoff bzw. als Massekunststoff in Frage kommt. Eine weitere Voraussetzung für die Eignung als Massekunststoff liegt auch darin, dass der Preis für die Aufgabe gemäss vorgeschlagene Polymermischung eine akzeptable Grösse aufweist.

Erfindungsgemäss wird die vorab vorgeschlagene Aufgabe mittels einer biologisch abbaubaren Polymermischung gemäss dem Wortlaut nach Anspruch 1 gelöst.

Die Vielzahl im Stand der Technik vorgeschlagenen Biopolymere bzw. biologisch abbaubaren Polymermischungen sind zu einem Grossteil auf Stärke aufgebaut bzw. verwenden Stärke, wobei allerdings native Stärke als technisch brauchbares Polymer kaum geeignet ist. Stärke wird deshalb vorgeschlagen, da es biologisch gut abbaubar ist, einen günstigen Preis aufweist und aufgrund des Basierens auf einem nachwachsenden Rohstoff unabhängig von Erdölprodukten ist. Aufgrund der schlechten Eignung von nativer Stärke als "technischer Kunststoff" wird erfindungsgemäss vorgeschlagen sogenannte thermoplastische Stärke zu verwenden, wie sie beispielsweise in der PCT/WO90/05161 vorgeschlagen wird. Diese thermoplastische Stärke wird erhalten, indem native Stärke mittels eines Plastifizier- oder Quellmittels in der Schmelze zu einer homogenen Masse verarbeitet wird, wobei der Anteil an Quell- oder Plastifiziermittel in der Regel zwischen 10 und ca. 40%, bezogen auf das Gesamtgewicht der Mischung, betragen kann. Geeignete Quell- oder Plastifiziermittel sind, wie in Anspruch 2 dargelegt, unter anderem beispielsweise Glyzerin oder Sorbitol.

Aufgrund der nach wie vor limitierten Eigenschaften von thermoplastischer Stärke für die Verwendung in Massekunststoffen wird nun erfindungsgemäss vorgeschlagen, diese mit mindestens einem weiteren Polymeren zu mischen, wie mit einem aromatischen Polyester, mit einem Polyester-Copolymeren, wobei das Polyester-Copolymer aus üblichen Diolen und aus aromatischen und aliphatischen Dicarbonsäuren hergestellt ist, mit einem Polyethylenoxidpolymer bzw. einem Polyglykol, einem Polyesterurethan und/oder Mischungen davon. Für die Verbesserung der eher mässigen Materialeigenschaften von thermoplastischer Stärke haben sich insbesondere die Polymerklassen der diversen Polyester und Copolyester bzw. Polyglykole als geeignete Materialien erwiesen. Die im Stand der Technik vorgeschlagenen aliphatischen Polyester, welche zwar eine gute biologische Abbaubarkeit aufweisen, sind aufgrund ihrer ebenfalls mässigen Materialeigenschaften in bezug auf Schmelzpunkt und Zugfähigkeit nicht besonders geeignet, zu einer Verbesserung der Materialeigenschaften der thermoplastischen Stärke selbst beizutragen. Demgegenüber zeigen aromatische Polyester ausgezeichnete Materialeigenschaften, jedoch ist ihre biologische Abbaubarkeit eher mässig. Dagegen weisen nun unter anderem Polyester-Copolymere, basierend auf aromatischen und aliphatischen Di-Carbonsäuren sowie Polyesterurethane sowohl hervorragende Materialeigenschaften auf, wie auch eine schnelle biologische Abbaubarkeit, weshalb sie sich besonders gut eignen für die Verwendung in Polymermischungen mit thermoplastischer Stärke.

Die in der Polymermischung mit thermoplastischer Stärke erfindungsgemäss vorgeschlagenen, zu verwendenden Polyester-Copolymere sind nebst den üblich verwendeten Polyolen auf aromatischen und aliphatischen Di-Carbonsäuren aufgebaut, und weisen die nachfolgende allgemeine Struktur auf:

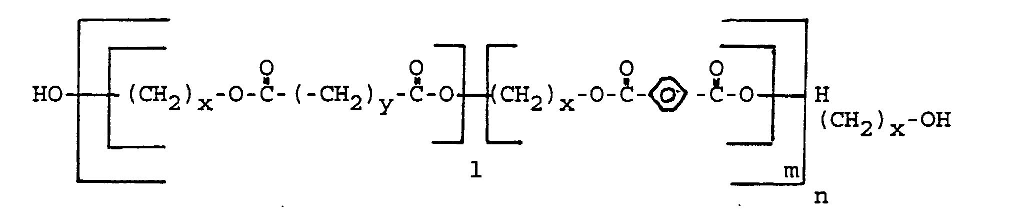

Die erfindungsgemäss vorgeschlagenen Polyester-Copolymere können aus petrochemischen Massenprodukten, wie Adipinsäure, Sebacinsäure, Terephthalsäure und einem Diol, mittels Polykondensation hergestellt werden, wobei als Diole handelsübliche, wie 1,2-Ethandiol, 1,3-Propandiol, 1,4-Butandiol und/oder 1,6 Hexandiol verwendet werden. Wesentlich ist, dass sowohl aromatische wie auch aliphatische Di-Carbonsäuren verwendet werden, mittels welchen die statistischen Polyester-Copolymere, beispielsweise mittels eines konventionallen Polykondensationsverfahrens hergestellt werden.

Statistische Copolyester aus aliphatischen und aromatischen Di-Carbonsäuren, mit einem Anteil, beispielsweise von ca. 35 - 55 mol% an aromatischer Säure, wie beispielsweise Terephthalsäure, stellen einen optimalen Kompromiss zwischen biologischer Abbaubarkeit und Materialeigenschaften dar, womit sie besonders gut geeignet sind in Mischungen mit thermoplastischer Stärke. Die biologische Abbaubarkeit derartiger, statistischer Copolyester liegt innerhalb 8 - 12 Wochen in Kompost und Erde. In diesem Zusammenhang sei auf das US-Patent 5 446 079 verwiesen, in welchem die Darstellung von aliphatisch-aromatischen Copolyestern ausführlich beschrieben ist.

Für die Herstellung eines erfindungsgemässen Stärke/Polyester-Copolymerblends haben sich beispielsweise Polyalkylenterephthalate und Polyethylenterephthalate als geeignete Copolyester erwiesen, welche aus aliphatischen Diolen und aromatischen Dicarbonsäuren hergestellt werden.

Für den Fall, dass die Polymermischung weitgehendst auf thermoplastischer Stärke und einem aromatischen Polyester oder einem aliphatisch-aromatischen Copolyester basiert kann es vorteilhaft sein, als weitere Komponente einen aliphatischen Polyester oder Copolyester beizufügen, wie beispielsweise Polycaprolacton. Dadurch wird die beispielsweise relativ schlechte biologische Abbaubarkeit des aromatischen Polyesters durch die ausgezeichnete Abbaubarkeit des aliphatischen Polyesters ausgeglichen. Als Beispiel hierzu sei erwähnt eine Polymermischung, bestehend aus thermoplastischer Stärke, mindestens einem Polyethylenterephthalat (PET) oder ein Polyalkylenterephthalat sowie Polycaprolacton. Weitere Beispiele aliphatischer Polyester bzw. Copolyester sind Polymilchsäure, Polyhydroxybuttersäure, Polyhyroxybenzoesäure, Polyhydroxybuttersäure-Hydroxyvaleriansäure-Copolymer und/oder Mischungen davon.

Je nachdem wie die Herstellung der Polymermischung erfolgt ist es vorteilhaft, wenn diese zusätzlich ein Blockcopolymer als Phasenvermittler enthält, um zwischen der thermoplastischen Stärke und dem hydrophoben Polymer in Form des Polyesters eine kontinuierliche, homogene Phase zu bilden. Ein derartiger Phasenvermittler kann beispielsweise ein Reaktionsgemisch sein, erhalten durch im wesentlichen wasserfreies Mischen von thermoplastischer Stärke oder gegebenenfalls nativer bzw. destrukturierter Stärke mit einem aliphatischen oder aromatischen Polyester bzw. Copolyester, mit einem aromatisch/aliphatischen Copolyester, mit einem Polyesterurethan.

Der Anteil thermoplastischer Stärke, enthaltend das oben erwähnte Plastifizier- bzw. Quellmittel kann in der erfindungsgemäss vorgeschlagenen Polymermischung einen Anteil zwischen 10 - 95 Gew.%, bezogen auf das Gesamtgewicht, betragen, vorzugsweise werden 30- 75 Gew.% thermoplastischer Stärke verwendet. Der Anteil thermoplastischer Stärke hängt einerseits vom verwendeten Polyester bzw. Copolyester ab sowie andererseits vom Verwendungszweck der Polymermischung, wie Spritzguss, Extrusion oder Folienblasen. Auch die Anforderungen an die Materialeigenschaften beeinflussen den Anteil thermoplastischer Stärke. Werden beispielsweise erhöhte Materialanforderungen in bezug auf mechanische und thermische Eigenschaften gestellt, wird vorzugsweise ein Anteil thermoplastischer Stärke im Bereich von 40 - 65 Gew.% angestrebt, womit auch der Preis der Mischung nach wie vor akzeptabel bleibt.

Gegenstand der vorliegenden Erfindung sind auch Mischungen, enthaltend 90 - 30, insbesondere 80 - 40 Gew.% thermoplastisch verarbeitbare Polyesteramide aus 30 - 70 Gew.% aliphatischen Estern bzw. 70 - 30 Gew.% aliphatischen Amidstrukturen, wobei weiter vorzugsweise 10 - 90 Gew.%, insbesondere 20 - 60 Gew.% Stärke oder thermoplastische Stärke enthalten sind.

Das Zusetzen weiterer Additiven, wie Weichmacher, Stabilisatoren, Antiflammmitteln sowie weiterer, biologisch abbaubarer Polymere, wie Celluloseester, Celluloseacetat, Cellulose, Polyhydroxibuttersäure, hydrophoben Proteine, Polyvinylalkohol, etc., ist möglich und richtet sich erneut nach den Anforderungen an die herzustellende Polymermischung sowie selbstverständlich auch nach der Verfügbarkeit der entsprechenden Komponenten. Als Additive kommen auch die nachfolgend angeführten Polymere in Frage, wie Gelatine, Proteine, Zeine, Polysaccharide, Cellulosederivate, Polylactide, Polyvinylalkohol, Polyvinylacetat, Polyacrylate, Zuckeralkohole, Schellack, Casein, Fettsäurederivate, Pflanzenfasern, Lecithin, Chitosan, Polyesterpolyurethane sowie Polyesteramide. Zu erwähnen sind auch Polyesterblends, bestehend aus thermoplastischer Stärke, dem erfindungsgemäss vorgeschlagenen, aliphatisch/aromatischen Polyester sowie als weitere Komponente, Copolymere, ausgewählt aus Aethylen-Acrylsäure-Copolymer und Aethylen-Vinylalkohol-Copolymer.

Als Füllstoffe eignen sich insbesondere auch organische Füllstoffe, erhalten aus nachwachsenden Rohstoffen, wie beispielsweise Cellulosefasern.

Um die hydrophilen Polymereigenschaften von thermoplastische Stärke enthaltenden Werkstoffen zu reduzieren können auch Vernetzungsmittel zugesetzt werden, wie beispielsweise Alkylketendimere der nachfolgenden allgemeinen Formel: 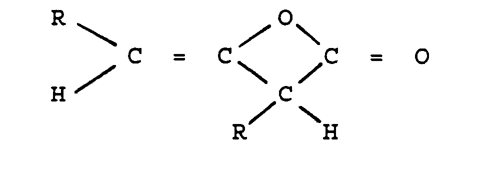 wobei R = linear gesättigte Alkylgruppe im Bereich von C12 - C 24. Die Konzentration derartiger Netzmittel beträgt in der Regel ca. 0,05 - 2 %, bezogen auf das Gewicht, Anteil trockene thermoplastische Stärke in der Polymermischung, vorzugsweise 0,1 - 1 Gew.%. Die vorgeschlagenen Alkylketendimere reagieren dabei mit den Hydroxylgruppen des Stärkepolymers.

Die Herstellung der erfindungsgemäss vorgeschlagenen Polymermischung erfolgt, indem Stärke, wie vorzugsweise thermoplastische Stärke, zusammen mit dem aromatischen Polyester und/oder dem Polyester-Copolymeren enthaltend aromatische wie auch aliphatische Bestandteile in der Schmelze gemischt wird, wobei vor oder beim Mischen der Wassergehalt in der Mischung auf weniger als 1 Gew.%, bezogen auf das Gewicht der Mischung, reduziert wird.

Speziell im Falle des ausschliesslichen Verwendens eines aromatischen Polyesters zusammen mit der thermoplastischen Stärke für das Herstellen der Polymermischung hat es sich als vorteilhaft erwiesen, zusätzlich einen aliphatischen Polyester bei der Herstellung beizufügen. Beispielsweise geeignete aliphatische Polyester sind beispielsweise Polycaprolacton, Polymilchsäure, etc. wie oben bereits angeführt. Weitere geeignete aliphatische Polyester sind beispielsweise Polyäthylensuccinat (PESU) und Polybutylensuccinat (PBSU). Die letztgenannten aliphatischen Polyester entstehen durch Reaktion von Glykolen mit aliphatischen Dicarbonsäuren und anderen Säuren und weisen die nachfolgende allgemeine Strukturformel auf:

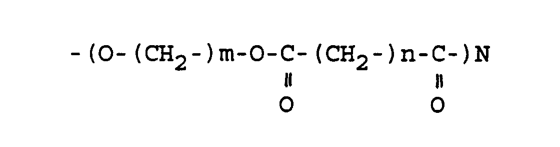

In jedem Falle wird gemäss einer bevorzugten Ausführungsvariante des erfindungsgemässen Verfahrens vorgeschlagen, den Wassergehalt während dem Mischen der Schmelze auf unter 0,5 Gew.%, vorzugsweise gar auf unter 0,1 Gew.%, bezogen auf das Gesamtgewicht der Mischung, zu reduzieren.

Beim Herstellen der erfindungsgemäss vorgeschlagenen Polymermischung liegt zu Beginn die thermoplastische Stärke als sogenannte disperse Phase vor, während dem der Polyester bzw. der Copolyester oder das Polyesterurethan, ein hydrophobes Polymer darstellend, als weitgehendst zusammenhängende, kontinuierliche Phase vorliegt. Es liegt nun die Vermutung nahe, dass beim Mischen der beiden Polymere unter Ausschluss von Wasser die in den Molekülketten des Polyesters bzw. Copolyesters, etc. eingebauten Estergruppen Veresterungsreaktionen mit der thermoplastischen Stärke eingehen, womit die so reagierenden Molekülketten mit der Stärke einen Phasenvermittler bilden, der eine molekulare Kopplung der beiden Phasen ermöglicht, und sich somit eine kontinuierliche Phase bildet. Im Falle von Feuchtigkeit wird diese Reaktion konkurrenziert, indem die Säureestergruppen bei Anwesenheit von Wasser nicht mit der Stärke zur Bildung des Phasenvermittlers reagieren, sondern hydrolisieren. Damit aber wird die Bildung des Phasenvermittlers verhindert, womit ein einwandfreies Dispergieren bzw. Homogenisieren verunmöglicht wird. Selbstverständlich ist es möglich von vorn herein einen Phasenvermittler, wie ein Blockcopolymer, zu verwenden, welches mindestens zwei Blöcke umfasst, wobei der eine Block in der hydrophoben Polyesterphase wenigstens weitgehendst löslich ist und der andere Block wenigstens weitgehendst in der Stärkephase löslich ist. In diesem Zusammenhang sei auf die DE-42 37 535.5 verwiesen.

Je nach verwendetem aromatischen, aliphatischen, aromatisch/aliphatischen Copolyester und/oder Polyesterurethan wird das Mischen in der Schmelze in einem Temperaturbereich zwischen 120 - 260°C ausgeführt, vorzugsweise in einem Bereich von 140 - 160°C. Die Mischtemperatur muss so gewählt werden, dass keine Schädigung des verwendeten Polyesters bzw. Copolyesters erfolgen kann. Das Mischen der thermoplastischen Stärke mit dem oder den Polyesterkomponenten, zusammen gegebenenfalls mit weiteren Additiven und Komponenten, erfolgt vorzugsweise in einem Extruder oder Kneter, welcher vorzugsweise eine Entgasungseinrichtung aufweist, für das kontinuierliche Abziehen von Feuchte, um die geforderte Wasserfreiheit zu erlangen. Es hat sich gezeigt, dass beim Mischen der thermoplastischen Stärke mit dem oder den Polyestern Wasser gebildet wird, was beispielsweise auf die oben erwähnte Reaktion der Estergruppen mit der Stärke zur Bildung des Phasenvermittlers schliessen lässt. Beim Verlassen des Extruders bzw. Kneters durch die Düse weist die Schmelze einen äusserst geringen Wassergehalt auf, vorzugsweise < 0,5 bzw. < 0,1 Gew.% auf. Nach Abziehen aus der Düse wird die Schmelze vorzugsweise in einem Wasserbad gekühlt und konditioniert, um anschliessend beispielsweise granuliert zu werden. Es hat sich als vorteilhaft erwiesen, wenn die an sich trockene Schmelze in einem Wasserbad gekühlt wird, damit sie in der Grössenordnung von 2 - ca. 6 Gew.%, bezogen auf das Gesamtgewicht, an Wasser aufnimmt, um eine einwandfreie Granulierung zu gewährleisten.

Die erfindungsgemäss hergestellte Polymermischung mindestens beinhaltend thermoplastische Stärke und beispielsweise das Polyester-Copolymer aus aromatischen und aliphatischen Blökken, eignet sich ausgezeichnet als Massekunststoff für verschiedendste Anwendungen im Bereich von sogenannten "technischen Kunststoffen". So ist ein Verarbeiten im Spritzgussvrfahren, wie auch durch Extrusion und Folienblasen möglich. Allerdings hat es sich beim Verarbeiten des erfindungsgemässen Polymergemisches als vorteilhaft erwiesen, wenn die beispielsweise als Granulat vorliegende Polymermischung vor dem Verarbeiten, entweder mittels Wasser oder einem Weichmacher, wie Glyzerin oder einem Gemisch davon, konditioniert wird. Angestrebt wird beispielsweise ein Wassergehalt von ca. 1 - 6 Gew.%, bezogen auf das Gesamtgewicht, vorzugsweise 3 - 5 Gew.%, wie beispielsweise üblich bei der Verarbeitung von Polyestern. Auch die hergestellten Spritzgussteile, Extrudate oder Folien werden vorzugsweise noch unmittelbar nach deren Herstellung in einer Umgebung gelagert mit einer relativen Feuchte von mindestens 40%, vorzugsweise mindestens 45 - 50%.

Beispiele von möglichen und bevorzugten Polymermischungen, mindestens aufweisend Stärke bzw. thermoplastische Stärke und ein hydrophobes Polymer, wie beansprucht in einem der abhängigen Ansprüche 2 - 15 bzw. hergestellt gemäss einem Verfahren, dargelegt in einem der Ansprüche 16 - 22, sind in den nachfolgend dargestellten Tabellen 1 - 4 aufgeführt.

Die insgesamt 28 angegebenen Beispiele schliessen dabei sowohl Komponenten mit ein, welche für die Herstellung der thermoplastischen Stärke im Sinne von Plastifiziermittel bzw. Quellmittel verwendet worden sind, wie auch die möglichen polymeren Mischpartner zur thermoplastischen Stärke für die Herstellung der erfindungemäss vorgeschlagenen Polymermischungen. Zudem enthalten die Tabellen die Verarbeitungsbedingungen und insbesondere den während der Herstellung der Polymermischung herrschende Wassergehalt im Extruder, welcher durchwegs < als 0,1 Gew.% betrug. Weiter sind in den Tabellen bevorzugte Anwendungsmöglichkeiten der beispielsweise hergestellten Polymermischungen angeführt. Selbstverständlich enthalten die Tabellen nur Beispiele, und alle eingangs erwähnten Komponenten sind geeignet für das Mischen mit Stärke bzw. thermoplastischer Stärke zur Herstellung von erfindungsgemäss definierten Ausgangspolymermischungen für technische wie auch nicht technische Anwendungen.

**Tabelle / Table 1**

| Beispiele/Examples | | | | | | | |
|---|---|---|---|---|---|---|---|
| Example | 1 | 2 | 3 | 4 | 5 | 6 | 7 |
| ¹Starch % | 42,2 | 24,0 | 29,9 | 24,0 | 33,0 | 38,0 | 21,5 |
| ¹Sorbitol % | 14,0 | 8,0 | 9,5 | 8,0 | 9,9 | 11,8 | 6,9 |
| ¹Glycerin % | 9,5 | 6,0 | 6,5 | 6,0 | 7,9 | 9,3 | 2,1 |
| ²TPS % | 60,5 | 34,9 | 42,0 | 34,9 | 46,7 | 54,5 | 27,8 |
| H₂O % | < 0,1 | < 0,1 | < 0,1 | < 0,1 | < 0,1 | < 0,1 | < 0,1 |
| ³PLA % | - | - | - | - | 40,0 | 10,9 | - |
| ⁵Polyester 1 | - | - | 54,1 | 45,0 | - | 30,0 | - |
| ⁶PCL % | - | 12.0 | - | 17,0 | - | - | - |
| H₂O % | < 0,1 | < 0,1 | < 0,1 | < 0,1 | < 0,1 | < 0,1 | < 0,1 |
| ⁷Extrusion | ZSK 40 | ZSK 40 | ZSK 40 | ZSK 40 | ZSK 40 | ZSK 40 | ZSK 40 |
| T °C | 212 | 225 | 210 | 210 | 215 | 210 | 200 |
| Pressure bar | 8,5 | 2,0 | 2,5 | 2,5 | 6,2 | 7,5 | 0,5 |
| MFI g/10' | 9 | 13 | 11,5 | 13 | 8,5 | 8,0 | 29 |
| Granulat | 4 mm | 4 mm | 4 mm | 4 mm | 4 mm | 4 mm | 4 mm |
| Gra H₂O % | 3.0 | 3.6 | 3,4 | 3,6 | 3,4 | 3,4 | 3,0 |
| Anwendung | | | | | | | |
| Blasfolie | + | + | + | + | + | + | - |
| Flachfolie | + | + | + | + | + | + | - |
| Platten | + | + | + | + | + | + | - |
| Spritzguß | + < 0,4 %* | - | - | - | - | - | - |
| Fasern | - | + | - | + | - | - | + |

| | | | | | | | |
|---|---|---|---|---|---|---|---|
| ¹Starch = nativ polatoe starch dried 3,5% H₂O, Sorbitol = Sorbitol LG DHR 71%ig, Glycerin 99,5%ig; | | | | | | | |
| ²TPS = thermoplastic starch = starch+sorbitol+glycerin < 0,1 % H₂O, - Wasseranteil durch Entgasung, nach dem bekannten Verfahren EP 0 397 819 besteht wasserfreie TPS aus Stärke, Sorbitol und Glycerin; | | | | | | | |
| ³PLA (Polylactic acid resin) = Mitsui Toatsu Chemicals LACEA H 100 MFR 13 190°C 2,16 kg; | | | | | | | |
| ⁵Polyester1 = BASF ZK 242/108 Copolyester aus aliphatischen Diolen und aliphatischen/aromatischen Dicarbonsäuren MVR 3,0 bei 190°C/2, 16 kg; | | | | | | | |
| ⁶PCL (Polycaprolacton) = Union Carbide Tonc Polymer P-787 MFI 1.0 125°C 44psi g/10 min; | | | | | | | |
| ⁷Extrusion Equipment = Werner&Pfleiderer ZSK 40; | | | | | | | |
| * 0,1 - 0,4 % Wassergehalt | | | | | | | |

**Tabelle/Table 2**

| Beispiele/Examples | | | | | | | |
|---|---|---|---|---|---|---|---|
| Example | 8 | 9 | 10 | 11 | 12 | 13 | 14 |
| ¹Starch % | 38,2 | 24,6 | 29,2 | 24,6 | 30,7 | 28,0 | 21,5 |
| ¹Sorbitol % | 12,8 | 8,2 | 9,4 | 8,8 | 9,1 | 8,8 | 6,9 |
| ¹Glycerin % | 8,5 | 6,0 | 6,2 | 6,0 | 7,4 | 6,2 | 4,1 |
| ²TPS % | 54,5 | 35,5 | 41,1 | 36,0 | 43,5 | 39,5 | 29,7 |
| H₂O % | < 0,1 | < 0,1 | < 0,1 | < 0,1 | < 0,1 | < 0,1 | < 0,1 |
| ³PPDX % | 34,0 | - | - | 6,5 | - | - | 33,8 |
| ⁴PT-C300 | - | - | 45,1 | - | - | - | - |
| ⁵PT-T8-200 | - | 32,5 | - | - | 47,0 | 57,0 | - |
| H₂O % | < 0,1 | < 0,1 | < 0,1 | < 0,1 | < 0,1 | < 0,1 | < 0,1 |
| ⁷Extrusion | ZSK 40 | ZSK 40 | ZSK 40 | ZSK 40 | ZSK 40 | ZSK 40 | ZSK 40 |
| T °C | 220 | 214 | 240 | 215 | 215 | 210 | 205 |
| Pressure bar | 6.5 | 3,5 | 5,5 | 7,5 | 4,5 | 7,5 | 0,5 |
| MFI g/10' | 8 | 13 | 2,5 | 11,5 | 8,5 | 8,0 | 30 |
| Granulat | 4 mm | 4 mm | 4 mm | 4 mm | 4 mm | 4 mm | 4 mm |
| Gra H₂O % | 3.9 | 3,6 | 3,5 | 3,3 | 3,4 | 3,6 | 3,2 |
| Anwendung | | | | | | | |
| Blasfolie | + | + | - | + | + | + | - |
| Flachfolie | + | + | + | + | + | + | - |
| Platten | + | + | + | + | + | + | - |
| Spritzguß | + < 0.15* | - | + < 0,4* | - | - | - | - |
| Fasern | - | - | - | - | - | - | + |

| | | | | | | | |
|---|---|---|---|---|---|---|---|
| ¹Starch = nativ potatoe starch dried 3,5% H₂O, Sorbitol = Sorbitol LG DHR 71%ig, Glycerin 99,5%ig; | | | | | | | |
| ²TPS = thermoplastic starch = starch+sorbitol+glycerin < 0,1 % H₂O, - Wasseranteil durch Entgasung, nach dem bekannten Verfahren EP 0 397 819 besteht wasserfreie TPS aus Stärke, Sorbitol und Glycerin; | | | | | | | |
| ³PPDX . Polyparadioxanone, Shell International Chemicals Ltd, peak melting deg °C 110,; | | | | | | | |
| ⁴PT-C300ZT, Enviro Plastic, Plantet Polymers, VICAT Softening Temp. 89°C, Polyethylenoxidpolymers; | | | | | | | |
| ⁵PT-T8-200DL. Enviro-Plastic C, Planet Polymers, Polyethylenoxidpolymers; | | | | | | | |
| ⁷Extrusion Equipment = Werner&Pflcidcrer ZSK 40; | | | | | | | |
| * 0,1 - 0,4 % Wassergehalt | | | | | | | |

**Tabelle / Table 3**

| Beispiele/Examples | | | | | | | |
|---|---|---|---|---|---|---|---|
| Example | 15 | 16 | 17 | 18 | 19 | 20 | 21 |
| ¹Starch % | 20,9 | 24,6 | 20,4 | 24,6 | 9,2 | 9,2 | 9,2 |
| ¹Sorbitol % | 7,0 | 8,2 | 6,6 | 8,8 | 2,7 | 2,7 | 2,7 |
| ¹Glycerin % | 4,7 | 6,0 | 4,4 | 6,0 | 2,2 | 2,2 | 2,2 |
| ²TPS % | 29,9 | 35,5 | 28,6 | 36,0 | 13,0 | 13,0 | 13,0 |
| H₂O % | < 0,1 | < 0,1 | < 0,1 | < 0,1 | < 0,1 | < 0,1 | < 0,1 |
| ³Füllstoff% | 26,9 | - | 25,0 | - | 60,0 | - | 60,0 |
| ⁵Polyester 1 | - | - | 43,6 | 35,6 | - | - | 25,9 |
| ⁶Füllstoff% | - | 25,0 | - | 25,0 | - | 58,0 | - |
| H₂O % | < 0,1 | < 0,1 | < 0,1 | <0,1 | < 0,1 | < 0,1 | < 0,1 |
| ⁷Extrusion | ZSK 40 | ZSK 40 | ZSK 40 | ZSK 40 | ZSK 40 | ZSK 40 | ZSK 40 |
| T °C | 203 | 206 | 220 | 215 | 205 | 205 | 220 |
| Pressure bar | 156,5 | 21 | 15 | 22 | 35 | 40 | 35 |
| MFI p/10' | 13 | 9 | 12,5 | 8,5 | 3 | 2,8 | 2,2 |
| Granulat | 4 mm | 4 mm | 4 mm | 4 mm | 4 mm | 4 mm | 4 mm |
| Gra H₂O % | 3,5 | 3,6 | 3,4 | 3,6 | 3,4 | 3,4 | 3,0 |
| Anwendung | | | | | | | |
| Blasfolie | - | - | - | - | - | - | - |
| Flachfolie | (+) | (+) | (+) | (+) | - | - | - |
| Platten | + | + | + | + | + | + | + |
| Spritzguß | + < 0,2 %* | +< 0,2 %* | +< 0,2 %* | +< 0,2 %* | +< 0,2 %* | +< 0,2 %* | +< 0,2 %* |
| Fasern | - | - | - | - | - | - | - |

| | | | | | | | |
|---|---|---|---|---|---|---|---|
| ¹Starch = nativ potatoe starch dried 3,5% H₂O, Sorbitol = Sorbitol LG DHR 71%ig, Glycerin 99,5%ig; | | | | | | | |
| ²TPS = thermoplastic starch = starch+sorbitol+glycerin < 0,1 % H₂O. - Wasseranteil durch Entgasung, nach dem bekannten Verfahren EP 0 397 819 besteht wasserfreie TPS aus Stärke, Sorbitol und Glycerin; | | | | | | | |
| ³Füllstoff, mikronisierte Cellulose; | | | | | | | |
| ⁵Polyester1 = BASF ZK 242/108 Copolyester aus aliphatischen Diolen und aliphatischen/aromatischen Dicarbonsäuren MVR 3,0 bei 190°C/2,16 kg; | | | | | | | |
| ⁶Füllstoff, mikronisierte Baumwolle | | | | | | | |
| ⁷Extrusion Equipment = Werner&Pfleiderer ZSK 40; | | | | | | | |
| *0,1 - 0.4 % Wassergchalt | | | | | | | |

**Tabelle / Table 4**

| Beispiele/Examples | | | | | | | |
|---|---|---|---|---|---|---|---|
| Example | 22 | 23 | 24 | 25 | 26 | 27** | 28** |
| ¹Starch % | 34,5 | 35,5 | 40,5 | 50,5 | 60,7 | 70,3 | 67,8 |
| ¹Sorbitol % | - | - | - | - | - | - | - |
| ¹Glycerin % | 16,3 | 16,5 | 12,0 | 7,1 | 4,0 | 4,5 | - |
| ²TPS % | 74,8 | 74,4 | 98,6 | 98,5 | 98,2 | 87,4 | 87,8 |
| H₂O % | < 0,1 | < 0,1 | < 0,1 | < 0,1 | < 0,1 | < 0,1 | < 0,1 |
| ³PLA | 24,2 | - | - | - | - | - | - |
| ⁵Polyester 1 | - | 24,5 | - | - | - | - | - |
| ⁶ | - | - | - | - | - | - | - |
| H₂O % | < 0,1 | < 0,1 | < 0,1 | < 0,1 | < 0,1 | < 0,1 | < 0,1 |
| ⁷Extrusion | ZSK 40 | ZSK 40 | ZSK 40 | ZSK 40 | ZSK 40 | ZSK 40 | ZSK 40 |
| T °C | 200 | 206 | 190 | 170 | 160 | 155 | 155 |
| Pressure bar | 15 | 15 | 20 | 26 | 31 | 35 | 37 |
| MFI g/10' | 12 | 14 | 122,5 | 10 | 6 | 5 | 5,5 |
| Granulat | 4 mm | 4 mm | 4 mm | 4 mm | 4 mm | 4 mm | 4 mm |
| Gra H₂O % | 2,1 | 2,1 | 2,2 | 2,6 | 0,4 | 0,4 | 0,3 |
| Anwendung | | | | | | | |
| Blasfolie | + | + | + | + | + | + | + |
| Flachfolie | + | + | + | + | + | + | + |
| Platten | + | + | + | + | + | + | + |
| Spritzguß | - | - | - | (+) | +< 0,15 %* | +< 0,2 %* | +< 0,2 %* |
| Fasern | - | - | - | - | - | - | - |

| | | | | | | | |
|---|---|---|---|---|---|---|---|
| ¹Starch = nativ potatoe starch dried 3,5% H₂O, Sorbitol = Sorbitol LG DHR 71%ig, Glycerin 99,5%ig; | | | | | | | |
| ²TPS = thermoplastic starch = starch+sorbitol+glycerin und/oder BAK 1095, < 0,1 % H₂O, - Wasseranteil durch Entgasung, nach dem bekannten Verfahren EP 0 397 819, 27** + 28** Starch = nativ potatoe starch 18% H₂O; | | | | | | | |
| ³PLA (Polylactic acid resin) = Mitsui Toatsu Chemicals LACEA H 100 MFR 13 190°C 2,16 kg; | | | | | | | |
| ⁵Polyester1 = BASF ZK 242/108 Copolyester aus aliphatischen Diolen und aliphatischen/aromatischen Dicarbonsäuren MVR 3,0 bei 190°C/2,16 kg; | | | | | | | |
| ⁶PCL (Polycaprolacton) = Union Carbide Tone Polymer P-787 MFI 1.0 125°C 44psi g/10 min; | | | | | | | |
| ⁷Extrusion Equipment = Werner&Pfleiderer ZSK 40; | | | | | | | |
| * 0,1 - 0,4 % Wassergehalt | | | | | | | |

Mittels erfindungsgemäss vorgeschlagenen Polymermischungen hergestellte Spritzgussteile, Extrudate und Folien weisen nebst relativ guten Materialeigenschaften eine hervorragende biologische Abbaubarkeit auf, weshalb sie einen gewichtigen Beitrag zu leisten vermögen an die akute Abfallproblematik. So sind beispielsweise Folien hergestellt aus einer erfindungsgemäss vorgeschlagenen Polymermischung ausgezeichnet geeignet für verschiedendste Anwendungen im Landwirtschaftsbereich, beispielsweise zum Abdecken von Feldern, können doch derartige Folien nach deren Verwendung entweder kompostiert werden, oder aber im Felde in das Erdreich umgepflügt werden.
Auch für die Herstellung von Kompostiersäcken, Kompostierabfallbehältnissen, usw., eignen sich derartige Polymermischungen. Weiter lassen sich mittels Formblasen aus der erfindungsgemäss vorgeschlagenen Polymermischung beispielsweise Behälter und Flaschen herstellen.

Die erfindungsgemässen Polymermischungen eignen sich aber auch für die Herstellung von textilen Erzeugnissen, wie beispielsweise für das Erzeugen von Fasern, Monofilen, Flächengebilden, wie Gewebe, Filze, Vliese, sogenannte Backsheets, Textilverbundstoffe, Flocken, Watten, wie auch linienförmige Gebilde, wie beispielsweise Fäden, Garne, Seile, Leinen, etc. Insbesondere hat es sich in der Praxis gezeigt, dass die erfindungsgemässen Polymermischungen geeignet sind für die Herstellung von Hygieneartikeln, wie Windeln, Binden, Inkontinenzprodukte sowie Betteinlagen. Diese Hygieneartikel weisen in ihrem Aufbau unter anderem Vliesen auf, hergestellt aus dem erfindungsgemässen Polymerwerkstoff, da dieser eine sehr gute Hautverträglichkeit aufweist, atmusaktiv ist, wasserdampfdurchlässig ist bei gleichzeitiger Wasserdichtheit, und dabei aber vollständig biologisch abbaubar ist.

Ein Grossteil der erfindungsgemäss vorgeschlagenen Polymermischungen, wie insbesondere enthaltend thermoplastische Stärke und/oder einen Copolyester bzw. und/oder ein Polyesterurethan eignen sich zudem als Klebstoffe oder aber können verwendet werden als Beschichtungen, wie beispielsweise für die Imprägnierung von textilen Geweben. Dabei hat es sich gezeigt, dass die für diese Anwendungsbereiche geeigneten, erfindungsgemäss vorgeschlagenen Polymermischungen vorzugsweise wenigstens teilweise in alkoholischen Lösungsmitteln gelöst vorgelegt und appliziert werden. So wurde beispielsweise im Zusammenhang mit Versuchsbeispiel 29 überraschend festgestellt, dass die so hergestellte Polymermischung in heissem Alkohol-Aethanolgemisch löslich ist. Eine 20% alkoholische Lösung hat direkt nach der Herstellung eine Viskosität von 100^{m} Pas. Auch in diesem Falle ergab sich eine mögliche Verwendung im Sinne eines biologisch abbaubaren Klebstoffes, als Beschichtung bzw. Imprägnierung, welche hydrophobe Eigenschaften bewirkt und wasserdampfdurchlässig ist. Die in bezug auf Versuchsbeispiel 29 festgestellte Verwendung ist auch übertragbar auf einen Grossteil der übrigen Versuchsbeispiele und weitere erfindungsgemäss vorgeschlagene Polymermischungen.

Selbstverständlich eignen sich die erfindungsgemässen Polymermischungen aber für x-beliebige andere Anwendungen, wie beispielsweise auch für Spritzguss-Einwegprodukte, etc.

## Patentansprüche

1. Biologisch abbaubare Polymermischung, umfassend mindestens ein auf nachwachsenden Rohstoffen basierend hergestelltes Biopolymer, **dadurch gekennzeichnet, dass** als Biopolymer mindestens thermoplastische Stärke vorliegt, welche erhältlich ist durch Mischen von nativer Stärke oder einem Derivat davon, mit mindestens einem Plastifizier- oder Quellmittel in der Grössenordnung von 10 - 40 Gew.%, bezogen auf die Mischung mit nativer Stärke oder einem Derivat davon bei einem Wassergehalt < 5 Gew.%, wobei das Plastifizier- oder Quellmittel dazu geeignet ist, die Stärke bzw. das Derivat mindestens anzuquellen oder anzulösen, und dass in der Polymermischung mindestens ein Polymer, ausgewählt aus der nachfolgenden Liste, vorgesehen ist:
- ein aromatischer Polyester,
- ein Polyester-Copolymer, aufweisend sowohl aliphatische wie auch aromatische Blöcke,
- ein Polyethylenoxidpolymer bzw. ein Polyglykol,
- ein Polyesterurethan
- und/oder Mischungen davon, wobei die Polymermischung erhältlich ist durch Mischen der thermoplastischen Stärke mit dem mindestens einen Polymer bei einem Wassergehalt < 1 Gew.%, bezogen auf die Polymermischung.

2. Biologisch abbaubare Polymermischung nach Anspruch 1, **dadurch gekennzeichnet, dass** die thermoplastische Stärke als Quell- oder Plastifiziermittel mindestens eine der nachfolgenden Substanzen enthält: Sorbitol, Glyzerin, eine Hydroxisäure, wie Milchsäure oder Oligomere davon und/oder deren Salze, Polyvinylalkohol, einen aliphatischer Polyester, wie niedermolekulare Polymilchsäure oder Polycaprolacton, und/oder Mischungen davon.

3. Biologisch abbauhare Polymermischung nach einem der Ansprüche 1 oder 2, **dadurch gekennzeichnet, dass** das Polyester-Copolymer nobst Polyolen aus aromatischen oder aliphatischen Di-Carbonsäuren hergestellt ist.

4. Biologisch abbaubare Polymermischung nach einem der Ansprüche 1 - 3, **dadurch gekennzeichnet, dass** das Polyester-Copolymer die folgende allgemeine Struktur aufweist: 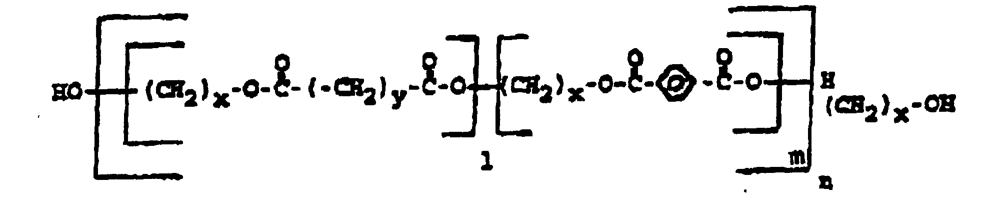 wobei 1 und m variabel sind und einer Verteilung unterliegen sowie deren Mittelwerte sich nach der Zusammensetzung des Reaktionsgemisches richten.

5. Biologisch abbaubare Polymermischung nach einem der Ansprüche 1 - 4, **dadurch gekennzeichnet, dass** das Polyester-Copolymer durch Polykondensation von einerseits mindestens einem Diol aus der Reihe 1,2-Ethandiol, 1,3-Propandiol, 1,4-Butandiol und/oder 1,6 Kexandiol mit andererseits mindestene einer aromatischen Di-Carbonsäure, wie beispielsweise Terephthalsäure und gegebenenfalls mindestens einer aliphatischen Di-Carbonsäure, wie Adipinsäure und/oder Sebacinsäure hergestellt ist.

6. Biologisch abbaubare Polymermischung nach einem der Ansprüche 1 - 5, **dadurch gekennzeichnet, dass** das Polyester-Copolymer ein Polyalkylenterephthalat oder ein Polyethylenterephthalat ist.

7. Biologisch abbaubare Polymermischung nach einem der Ansprüche 1 - 6, **dadurch gekennzeichnet, dass** als weitere Komponente ein aliphatischer Polyester bzw. Copolyester vorgesehen ist, wie beispielsweise Polymilchsäure, Polyhydroxybuttersäure, Polyhydroxybenzoesäure, Polyhydroxybuttersäure-Hydroxyvaleriansäure-Copolymer oder Polycaprolacton.

8. Biologisch abbaubare Polymermischung nach Anspruch 7, **gekennzeichnet durch** thermoplastische Stärke, mindestens ein Polyethylenterephthalat oder ein Polyalkylenterephthalat sowie **durch** Polycaprolacton.

9. Biologisch abbaubare Polymermischung nach einem der Ansprüche 1 - 8, **dadurch gekennzeichnet, dass** die Mischung ein Blockcopolymer als Phasenvermittler enthält, erhalten durch wasserfreies Mischen und Reagieren in der Schmelze von Stärke oder thermoplastischer Stärke mit mindestens einem der nachfolgenden Polymeren:
- einem Polyester-Copolymer mit aliphatischen und aromatischen Blöcken,
- einem aromatischen Polyester,
- einem aliphatischen Polyester, und/oder
- einem Polyesterurethan.

10. Biologisch abbaubare Polymermischung nach einem der Ansprüche 1 - 9, **dadurch gekennzeichnet, dass** mindestens eine weitere Komponente, wie ein Additiv, Zuschlagstoff oder Füllstoff miteingeschlossen ist, wie ein Weichmacher, ein Stabilisator, ein Antiflammittel, ein weiteres biologisch abbaubares Biopolymer, wie Celluloseester, Cellulose, Polyhydroxybuttersäure, ein hydrophobes Protein, Polyvinylalkohol, Gelatine, Zein, Polysaccarid, Polylactid, Polyvinylacetat, Polyacrylat, ein Zuckeralkohol, Schellack, Casein, ein Fettsäurederivat, Pflanzenfasern, Lecithin oder Chitosan.

11. Biologisch abbaubare Polymermischung nach einem der Ansprüche 1 - 10, **dadurch gekennzeichnet, dass** die Polymermischung mindestens einen organischen Füllstoff erhalten aus nachwachsenden Rohstoffen, wie insbesondere Cellulosefasern.

12. Biologisch abbaubare Polymermischung nach einem der Ansprüche 1 - 11, **dadurch gekennzeichnet, dass** zur weiteren Reduktion der hydrophilen Eigenschaften der thermoplastischen Stärke ein Vernetzungsmittel vorgesehen ist, wie beispielsweise eine Dicarbonsäure bzw. eine Polycarbonsäure sowie deren Anhydrid, ein Isocyanat, Fomaldehyd und deren Derivate, Harnstoff-Formaldehyd, ein Melamin-Formaldehyd bzw. ein Phenol-Formaldehyd-Harz, Phosphat, Polyphosphat und/oder ein Alkylketendimeres der allgemeinen Formel: 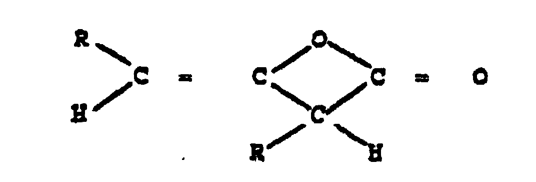 wobei R = linear gesättigte Alkylgruppe im Bereich von C12 bis C24.

13. Biologisch abbaubare Polymermischung nach einem der Ansprüche 1 - 12, **dadurch gekennzeichnet, dass** der Anteil thermoplastische Stärke, enthaltend ein Plastifizier- bzw. ein Quellmittel 10 - 95 Gew.%, bezogen auf das Gesamtgewicht der Mischung, beträgt.

14. Biologisch abbaubare Polymermischung nach einem der Ansprüche 1 - 13, **dadurch gekennzeichnet, dass** der Anteil thermoplastische Stärke in der Mischung 40 - 65 Gew.% beträgt.

15. Biologisch abbaubare Polymermischung nach einem der Ansprüche 1 - 5, **gekennzeichnet durch** thermoplastische Stärke, ein Polyester-Copolymer mit aliphatischen wie auch aromatischen Blöcken sowie ein Copolymeres, ausgewählt aus Aethylenacrylsäure-Copolymer und Aethylenvinylalkohol-Copolymer.

16. Verfahren zur Herstellung einer Polymermischung nach einem der Ansprüche 1 - 15, **dadurch gekennzeichnet, dass** thermoplastische Stärke, erhalten durch exotherme Umwandlung von nativer Stärke oder einem Derivat davon, mit mindestens einem der nachfolgenden Polymeren gemischt wird:
- einem aromatischen Polyester
- einem Polyester-Copolymeren mit aromatischen und aliphatischen Blöcken,
- einem Polyethylenoxidpolymer bzw. Polyglycol,
- einem Polyesterurethan
- und/oder Mischungen, wobei das Mischen der Schmelze erfolgt und wobei vor und/oder beim Mischen der Wassergehalt auf < 1,0 Gew.%, bezogen auf das Gewicht der Mischung, reduziert wird.

17. Verfahren nach Anspruch 16, **dadurch gekennzeichnet, dass** der Schmelze zusätzlich ein aliphatischer Polyester zugefügt wird.

18. Verfahren nach einem der Ansprüche 16 oder 17, **dadurch gekennzeichnet, dass** der Wassergehalt vor oder beim Misch auf < 0,5 Gew.%, vorzugsweise < 0,1 Gew.%, reduziert wird.

19. Verfahren nach einem der Ansprüche 16 - 18, **dadurch gekennzeichnet, dass** das Mischen der Schmelze in einem Temperaturbereich von 120 - 260°C erfolgt.

20. Verfahren nach einem der Ansprüche 16 - 19, **dadurch gekennzeichnet, dass** das Mischen in einem Extruder oder Kneter erfolgt, und dass nach Abzug der Schmelze aus der Düse diese in einem Wasserbad gekühlt und konditioniert wird, um anschliessend beispielsweise granuliert zu werden.

21. Verfahren zum Verarbeiten einer Polymermischung nach einem der Ansprüche 1 - 15, **dadurch gekennzeichnet, dass** die beispielsweise als Granulat vorliegende Polymermischung vor dem Verarbeiten durch Spritzen, Extrudieren oder Blasen mit einem Weichmacher, wie Glyzerin, Sorbitol, etc. und/oder Wasser konditioniert wird.

22. Verfahren nach Anspruch 21, **dadurch gekennzeichnet, dass** die als Granulat vorliegende Polymermischung zu einem Wassergehalt von 1 - 6 Gew.% konditioniert wird, und anschliessend gespritzt, extrudiert oder zu Folien geblasen wird, wobei das hergestellte Spritzgussteil oder Extrudat bzw. die Folie vorzugsweise noch unmittelbar nach Herstellen in relativ feuchter Umgebung gelagert wird, mit einer relativen Feuchte > 40%.

23. Verwendung einer Polymermischung nach einem der Ansprüche 1 bis 15 für die Herstellung einer Ein- oder Mehrschichtfolie.

24. Verwendung einer Polymermischung nach einem der Ansprüche 1 bis 15 zur Herstellung eines Behältnisses oder einer Flasche, hergestellt mittels Formblasen.

25. Verwendung einer Polymermischung nach einem der Ansprüche 1 bis 15 zur Herstellung von textilen Erzeugnissen, wie Fasern, Monofile, Garne, Seile, Leinen, Flocken, Watten, Gewebe, Filze, Vliese.

26. Verwendung einer Polymermischung nach einem der Ansprüche 1 bis 15 zur Herstellung von Hygieneartikel, wie Windeln, Binden, Inkontinenzprodukte, Betteinlagen und dgl., aufweisend mindestens ein Vlies und/oder ein Backsheet, bestehend aus der Polymermischung.

27. Verwendung einer Polymermischung nach einem der Ansprüche 1 bis 15 oder einer alkoholischen Lösung davon zur Herstellung eines Klebstoffs.

28. Verwendung einer Polymermischung nach einem der Ansprüche 1 bis 15 oder einer alkoholischen Lösung davon zur Herstellung einer Beschichtung, wie insbesondere ein Imprägnierungsmittel.

## Claims

1. Biologically degradable polymer mixture comprising at least one biopolymer produced on the basis of regenerative raw materials, **characterised in that** at least one thermoplastic starch is present as biopolymer and is obtained by mixing of native starch or a derivative thereof with at least one plasticiser or swelling agent in the order of magnitude of 10 to 40 weight percent referred to the mixture, with native starch or a derivative thereof with a water content of < 5 weight percent, wherein the plasticiser or swelling agent is suitable for the purpose of at least swelling or solubilising the starch or derivative and that at least one polymer selected from the following list is provided in the polymer mixture:
- an aromatic polyester,
- a polyester copolymer having both aliphatic and aromatic blockers,
- a polyethylene oxide polymer or a polyglycol,
- a polyester urethane
- and/or mixtures thereof, wherein the polymer mixture is obtained by mixing the thermoplastic starch with the at least one polymer with a water content of < 1 weight percent referred to the polymer mixture.

2. Biologically degradable polymer mixture according to claim 1, **characterised in that** the thermoplastic starch contains, as swelling agent or plasticiser, at least one of the following substances: sorbitol, glycerol, a hydroxy acid such as lactic acid or oligomers thereof and/or salts thereof, polyvinyl alcohol, an aliphatic polyester such as low-molecular polylactic acid or polycaprolactone and/or mixtures thereof.

3. Biologically degradable polymer mixture according to one of claims 1 and 2, **characterised in that** the polyester copolymer is produced from - apart from polyols - aromatic and aliphatic dicarboxylic acids.

4. Biologically degradable polymer mixture according to one of claims 1 to 3, **characterised in that** the polyester copolymer has the following general structure: 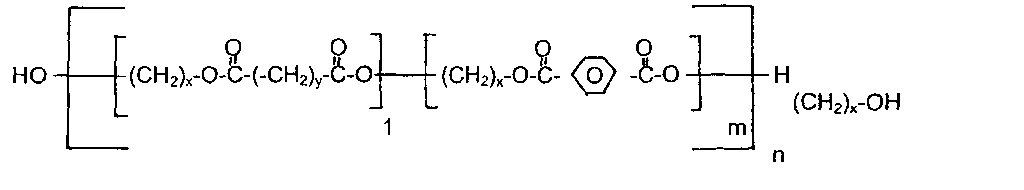 wherein 1 and m are variable and are subjected to a distribution and the mean values thereof depend on the composition of the reaction mixture.

5. Biologically degradable polymer mixture according to one of claims 1 to 4, **characterised in that** the polyester copolymer is produced by polycondensation of, on the one hand, at least one diol from the series 1,2-ethanediol, 1,3-propanediol, 1,4-butanediol and/or 1,6-hexanediol with, on the other hand, at least one aromatic dicarboxylic acid, such as for example terephthalic acid, and optionally at least one aliphatic dicarboxylic acid, such as adipic acid and/or sebacic acid.

6. Biologically degradable polymer mixture according to one of claims 1 to 5, **characterised in that** the polyester copolymer is a polyalkylene terephthalate or a polyethylene terephthalate.

7. Biologically degradable polymer mixture according to one of claims 1 to 6, **characterised in that** an aliphatic polyester or copolyester is provided as further component, such as for example polylactic acid, polyhydroxy butyric acid, polyhydroxy benzoic acid, polyhydroxy-butyric-acid/hydroxy-valeric-acid copolymer or polycaprolactone.

8. Biologically degradable polymer mixture according to claim 7, **characterised by** thermoplastic starch, at least one polyalkylene terephthalate or polyethylene terephthalate, and by polycaprolactone.

9. Biologically degradable polymer mixture according to one of claims 1 to 8, **characterised in that** the mixture contains a block copolymer as phase mediator, obtained by water-free mixing and reacting in molten state of starch or thermoplastic starch with at least one of the following polymers:
- a polyester copolymer with aliphatic and aromatic blockers,
- an aromatic polyester
- an aliphatic polyester and/or
- a polyester urethane.

10. Biologically degradable polymer mixture according to one of claims 1 to 9, **characterised in that** at least one further component such as an additive, a loading substance or a filler is included therewith, such as a softener, a stabiliser, a flame-retardant, a further biologically degradable biopolymer, such as cellulose ester, cellulose, polyhydroxy butyric acid, a hydrophobic protein, polyvinylalcohol, gelatine, zein, polysaccaride, polylactide, polyvinylacetate, polyacrylate, a sugar alcohol, shellac, casein, a fatty acid derivative, plant fibres, lecithin or chitosan.

11. Biologically degradable polymer mixture according to one of claims 1 to 10, **characterised in that** the polymer mixture contains at least one organic filler of regenerative raw materials, such as, in particular, cellulose fibres.

12. Biologically degradable polymer mixture according to one of claims 1 to 11, **characterised in that** for further reduction in the hydrophilic characteristics of the thermoplastic starch there is provided a wetting agent such as, for example, a dicarboxylic acid or a polycarboxylic acid as well as the anhydride thereof, an isocyanate, formaldehyde and derivatives thereof, urea formaldehyde, a melamine formaldehyde or a phenol formaldehyde resin, phosphate, polyphosphate and/or an alkylketenedimer of the general formula: 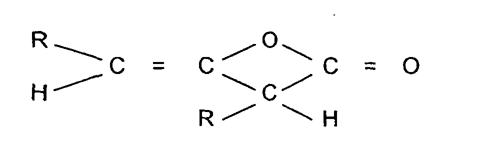 wherein R = linearly saturated alkyl groups in the range of C12 to C24.

13. Biologically degradable polymer mixture according to one of claims 1 to 12, **characterised in that** the proportion of thermoplastic starch containing a plasticiser or a swelling agent amounts to 10 to 95 weight percent referred to the total weight of the mixture.

14. Biologically degradable polymer mixture according to one of claims 1 to 13, **characterised in that** the proportion of thermoplastic starch in the mixture amounts to 40 to 65 weight percent.

15. Biologically degradable polymer mixture according to one of claims 1 to 5, **characterised by** thermoplastic starch, a polyester copolymer with aliphatic and also aromatic blockers as well as a copolymer selected from ethyleneacryl acid copolymer and ethylenevinylalcohol copolymer.

16. Method of producing a polymer mixture according to one of claims 1 to 15, **characterised in that** thermoplastic starch obtained by exothermic conversion of native starch or a derivative thereof is mixed with at least one of the following polymers:
- an aromatic polyester
- a polyester copolymer with aliphatic and aromatic blockers,
- a polyethylene oxide polymer or a polyglycol,
- a polyester urethane
- and/or mixtures thereof, wherein the mixing takes place in molten state and wherein before and/or during mixing the water content is reduced to < 1.0 weight percent referred to the weight of the mixture.

17. Method according to claim 16, **characterised in that** in addition an aliphatic polyester is added to the melt.

18. Method according to one of claims 16 and 17, **characterised in that** the water content is reduced to < 0.5 weight percent, preferably < 0.1 weight percent, before or during mixing.

19. Method according to one of claims 16 to 18, **characterised in that** the mixing of the melt is carried out in a temperature range of 120 to 260° C.

20. Method according to one of claims 16 to 19, **characterised in that** the mixing is carried out in an extruder or a kneader and that after discharge of the melt from the nozzle the melt is cooled and conditioned in a water bath so as to be, for example, subsequently granulated.

21. Method of processing a polymer mixture according to one of claims 1 to 15, **characterised in that** the polymer material present as, for example, granulate is conditioned by a softener, such as glycerol, sorbitol, etc., and/or by water, before processing by injection-moulding, extruding or blow-moulding.

22. Method according to claim 21, **characterised in that** the polymer material present as granulate is conditioned to a water content of 1 to 6 weight percent and subsequently injection-moulded, extruded or blown into films, wherein the produced injection-moulded part or extrudate or the film is preferably stored in a relatively moist atmosphere, with a relative humidity greater than 40%, directly after production.

23. Use of a polymer mixture according to one of claims 1 to 15 for the production of a single-layer or multi-layer film.

24. Use of a polymer mixture according to one of claims 1 to 15 for the production of a container or a bottle produced by means of blow-moulding.

25. Use of a polymer mixture according to one of claims 1 to 15 for the production of textile products, such as fibres, monofilaments, yams, ropes, cords, flocks, wadding, fabrics, felts and fleeces.

26. Use of a polymer mixture according to one of claims 1 to 15 for the production of sanitary articles, such as diapers, bandages, incontinence products, bed inlays and the like, comprising at least one fleece and/or a backing sheet consisting of the polymer material.

27. Use of a polymer mixture according to one of claims 1 to 15 or an alcoholic solution thereof for producing an adhesive.

28. Use of a polymer mixture according to one of claims 1 to 15 or an alcoholic solution thereof for producing a coating such as, in particular, impregnating agent.

## Revendications

1. Mélange de polymères dégradables biologiquement comprenant au moins un biopolymère produit en se basant sur des matières premières renouvelables,
**caractérisé en ce que**
comme biopolymère il y a au moins un amidon thermoplastique qui est accessible par mélange d'amidon naturel ou d'un de ses dérivés avec au moins un agent plastifiant ou un agent gonflant dans l'ordre de grandeur de 10 à 40 % en poids - rapporté au mélange avec de d'amidon naturel ou d'un dérivé de celui-ci - pour une teneur en eau < 5 % en poids, dans lequel l'agent plastifiant ou l'agent gonflant convient pour gonfler ou faire se dissoudre l'amidon ou le dérivé, et au moins un polymère est choisi dans la liste suivante :
- un polyester aromatique,
- un copolymère de polyester possédant des blocs aussi bien aliphatiques qu'aromatiques,
- un polymère de polyoxyde d'éthylène ou un polyglycol,
- un polyester uréthane,
- et/ou des mélanges de ceux-ci,
le mélange de polymères étant accessible par mélange des amidons thermoplastiques, avec au moins un polymère pour une teneur en eau < 1 % en poids rapporté au mélange de polymères.

2. Mélange de polymères dégradables biologiquement selon la revendication 1,
**caractérisé en ce que**
l'amidon thermoplastique contient comme agent gonflant ou plastifiant, au moins une des substances suivantes : sorbitol, glycérol, un acide hydroxylé comme l'acide lactique ou des oligomères de celui-ci et/ou leurs sels, l'alcool polyvinylique, un polyester aliphatique, comme l'acide polylactique à bas poids moléculaire, ou la polycaprolactone, et/ou des mélanges de ceux-ci.

3. Mélange de polymères dégradables biologiquement selon l'une des revendications 1 ou 2,
**caractérisé en ce que**
le copolymère de polyester, outre les polyols est préparé à partir d'acides dicarboxyliques aromatiques ou aliphatiques.

4. Mélange de polymères dégradables biologiquement selon l'une des revendications 1 à 3,
**caractérisé en ce que**
le copolymère de polyester possède la structure générale suivante : 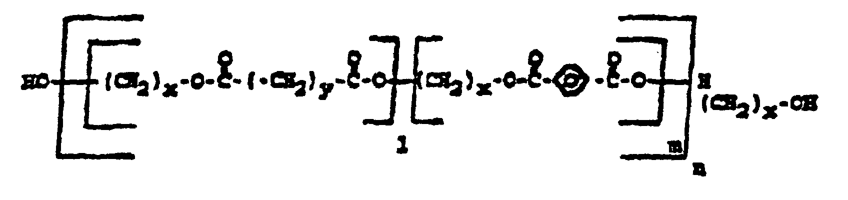 dans laquelle 1 et m sont variables et subissent une distribution ainsi que leurs valeurs moyennes s'orientent selon la composition du mélange réactionnel.

5. Mélange de polymères dégradables biologiquement selon l'une des revendications 1 à 4,
**caractérisé en ce que**
le copolymère de polyester et préparé par polycondensation de - d'une part au moins un diol choisi dans la série du 1,2-éthanediol; 1,3-propanediol ; 1,4-butanediol et/ou 1,6-hexanediol avec d'autre part au moins un acide dicarboxylique aromatique, comme par exemple l'acide téréphtalique et le cas échéant au moins un acide dicarboxylique aliphatiques comme l'acide adipique et/ou l'acide sébacique.

6. Mélange de polymères dégradables biologiquement selon l'une des revendications 1 à 5,
**caractérisé en ce que**
le copolymère de polyester est un téréphtalate de polyalkylène ou un téréphtalate de polyéthylène.

7. Mélange de polymères dégradables biologiquement selon l'une des revendications 1 à 6,
**caractérisé en ce que**
comme composant supplémentaire, un polyester ou un copolyester aliphatique est prévu, comme par exemple l'acide polylactique, l'acide polyhydroxybutyrique, l'acide polyhydroxybenzoïque, le copolymère acide polyhydrobutyrique - acide hydroxyvalérianique ou la polycaprolactone.

8. Mélange de polymères dégradables biologiquement selon la revendication 7,
**caractérisé par** des amidons thermoplastiques, au moins un polyéthylène-téréphtalate ou un polyalkylène-téréphtalate, ainsi que par la polycaprolactone.

9. Mélange de polymères dégradables biologiquement selon l'une des revendications 1 à 8,
**caractérisé en ce que**
le mélange contient un copolymère en blocs comme adjuvant de phase, obtenu par mélange en l'absence d'eau et mise en réaction à l'état fondu de l'amidon ou de l'amidon thermoplastique avec un des polymères suivants :
- un copolymère de polyester avec des blocs aliphatiques et aromatiques,
- un polyester aromatique,
- un polyester aliphatique et/ou
- un polyester uréthane.

10. Mélange de polymères dégradables biologiquement selon l'une des revendications 1 à 9,
**caractérisé en ce qu'**
au moins un composant supplémentaire - comme un additif, une substance d'addition ou une substance de charge - est incorporé conjointement - comme un agent plastifiant, un agent stabilisant, un agent anti inflammation, un autre biopolymère dégradable biologiquement, comme un ester de cellulose, la cellulose, l'acide polyhydroxybutyrique, une protéine hydrophobe, l'alcool polyvinylique, la gélatine, la zéine, un polysaccharide, un polylactide, l'acétate de polyvinyle, un polyacrylate, un alcool de sucre, la gomme laque, la caséine, un dérivé d'acide gras, des fibres végétales, la lécithine ou la chitosane.

11. Mélange de polymères dégradables biologiquement selon l'une des revendications 1 à 10,
**caractérisé en ce que**
le mélange de polymères contient au moins une substance organique de charge obtenue à partir de matières premières renouvelables comme en particulier des fibres de cellulose.

12. Mélange de polymères dégradables biologiquement selon l'une des revendications 1 à 11,
**caractérisé en ce qu'**
en vue d'une réduction supplémentaire des propriétés hydrophiles de l'amidon thermoplastique un agent de réticulation est prévu comme par exemple un acide dicarboxylique ou un acide polycarboxylique ainsi que leur anhydre, un isocyanate, le formaldéhyde et ses dérivés, une résine urée - formaldéhyde, une résine mélamine formaldéhyde ou une résine phénol-formaldéhyde, un phosphate, un polyphosphate et/ou un dimère d'alkyl cétine de formule générale 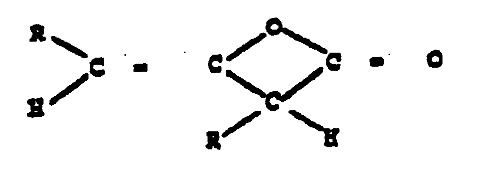 dans laquelle R = un groupe alkyle linéaire saturé dans la zone allant de C12 à C24.

13. Mélange de polymères dégradables biologiquement selon l'une des revendications 1 à 12,
**caractérisé en ce que**
la proportion d'amidon thermoplastique contenant un agent plastifiant ou un agent gonflant s'élève à 10 à 95 % en poids - rapport au poids total du mélange.

14. Mélange de polymères dégradables biologiquement selon l'une des revendications 1 à 13,
**caractérisé en ce que**
la proportion d'amidon thermoplastique dans le mélange s'élève à 40-65 % en poids.

15. Mélange de polymères dégradables biologiquement selon l'une des revendications 1 à 5,
**caractérisé par**
de l'amidon thermoplastique, un copolymère de polyester ayant des blocs aliphatiques comme aussi aromatiques, ainsi qu'un copolymère choisi parmi un copolymère acide acrylique - éthylène et un copolymère alcool vinylique - éthylène.

16. Procédé de production d'un mélange de polymères selon l'une des revendications 1 à 15,
**caractérisé en ce que**
l'amidon thermoplastique obtenu par conversion exothermique d'amidon naturel ou d'un de ses dérivés est mélangé à au moins un des polymères suivants :
- un polyester aromatique,
- un copolymère de polyester ayant des blocs aromatiques et aliphatiques,
- un polymère de polyoxyde d'éthylène ou un polyglycol,
- un polyester uréthane
et/ou des mélanges,
selon lequel le mélange s'effectue à l'état fondu et avant ou lors du mélange, la teneur en eau est réduite à < 1,0 % en poids - rapporté au poids du mélange.

17. Procédé selon la revendication 16,
**caractérisé en ce qu'**
au produit de fusion on ajoute en supplément un polyester aliphatique.

18. Procédé selon l'une des revendications 16 ou 17,
**caractérisé en ce que**
la teneur en eau avant ou lors du mélange est réduite à < 0,5 % en poids, de préférence < 0,1 % en poids.

19. Procédé selon l'une des revendications 16 à 18,
**caractérisé en ce que**
le mélange du produit de fusion s'effectue dans une zone de températures de 120 à 260°C.

20. Procédé selon l'une des revendications 16 à 19,
**caractérisé en ce que**
le mélange s'effectue dans une extrudeuse ou un malaxeur et on refroidit après retrait du produit de fusion de la buse, celui-ci dans un bain d'eau et on met en forme afin ensuite d'être par exemple granulé.

21. Procédé de façonnage d'un mélange de polymères selon l'une des revendications 1 à 15,
**caractérisé en ce que**
le mélange de polymères qui se présente par exemple sous forme de granulé, est mis en forme avant le façonnage par injection, extrusion ou soufflage avec un agent plastifiant comme le glycérol, le sorbitol etc...et/ou avec de l'eau.

22. Procédé selon la revendication 21,
**caractérisé en ce que**
le mélange de polymères qui se présente sous forme de granulés est mis en forme jusqu'à une teneur en eau de 1 à 6 % en poids, et ensuite est injecté, extrudé, ou soufflé en feuille, la partie de coulée par injection ou l'extrudat préparé ou la feuille étant stockée de préférence encore immédiatement après production dans un environnement relativement humide, avec une humidité relative > 40 %.

23. Utilisation d'un mélange de polymères selon l'une des revendications 1 à 15 pour la production de feuilles à une ou à plusieurs couches.

24. Utilisation d'un mélange de polymères selon l'une des revendications 1 à 15 en vue de la production d'un récipient ou d'une bouteille par soufflage - moulage.

25. Utilisation d'un mélange de polymères selon l'une des revendications 1 à 15 en vue de la production de produits textiles comme des fibres, des produits monofils, des toiles, des cordes, des toiles de lin, des flocons, de la ouate, des tissus, des feutres et des tissus non tissés.

26. Utilisation d'un mélange de polymères selon l'une des revendications 1 à 15 en vue de la production d'articles d'hygiène comme des couches, des bandages, des produits pour l'incontinence, des garnitures pour lit et similaires, possédant au moins un tissu non tissé et/ou une alèse consistant en le mélange de polymère.

27. Utilisation d'un mélange de polymères selon l'une des revendications 1 à 15, ou d'une solution alcoolique de celui-ci en vue de la production d'une colle.

28. Utilisation d'un mélange de polymères selon l'une des revendications 1 à 15, ou d'une solution alcoolique de celui-ci en vue de la production d'un revêtement comme en particulier un agent d'imprégnation.
